# EUROPÄISCHE PATENTSCHRIFT

(11) **EP 0 358 104 B1**
(45) Veröffentlichungstag und Bekanntmachung des Hinweises auf die Patenterteilung: **20.10.1993**
(21) Anmeldenummer: 89116060.8
(22) Anmeldetag: 31.08.1989
(51) Int. Cl.: B29C 45/42

(54) **Entnahmevorrichtung für Spritzgussteile**
Take-out device for injection mouldings
Dispositif d'enlèvement pour pièces injectées

(30) Priorität: 06.09.1988 DE 3830210
(43) Veröffentlichungstag der Anmeldung: 14.03.1990
(73) Patentinhaber: BASF Aktiengesellschaft, 67063 Ludwigshafen (DE)
(72) Erfinder: Schmidts, Kurt, D-7635 Schwanau (DE); Saumer, Wilhelm, D-7830 Emmendingen (DE)

(56) Entgegenhaltungen:
- DE-U- 8 200 184
- FR-A- 2 586 377
- PATENT ABSTRACTS OF JAPAN, Band 12, Nr. 197 (M-706)[3044], 8. Juni 1988; & JP-A-63 004 923 (SUMITOMO HEAVY IND. LTD) 09-01-1988
- PATENT ABSTRACTS OF JAPAN, Band 13, Nr. 140 (M-810)[3488], 6. April 1989; & JP-A-63 303 715 (JAPAN STEEL WORKS) 12-12-1988

## Beschreibung

Die Erfindung betrifft eine Vorrichtung zur Entnahme von Spritzgußteilen aus einer Spritzgießmaschine mit Etagenform, die zwei gegenüber einer feststehenden Formträgerplatte bewegbare Formträgerplatten aufweist.

Aus der deutschen Gebrauchsmusterschrift 8200184 ist ein Spritzgießwerkzeug mit einer Entnahmevorrichtung bekannt, bei dem Greifwerkzeuge zum Ein- und Ausfahren zwischen die Formträgerplatten von der bewegbaren Formträgerplatte über eine kinematische Kette angetrieben werden, die aus einem auf einer Zahnstange abrollbaren Zahnrad, einer damit verbundenen Kurbel und einer daran angelenkten weiteren Zahnstange zum Antrieb eines weiteren Zahnrades besteht, welches mit einem die Greifwerkzeuge führenden Kettentrieb gekoppelt ist.

Für die hier zugrundeliegende Spritzgießform ist eine solche Entnahmevorrichtung nicht geeignet, da die Ein- und Ausfahrbewegungen der mit der bewegbaren Formträgerplatte mitlaufenden Greifwerkzeuge auch auf solche der feststehenden Formträgerplatte zugeordnete übertragen werden müßten. Die technische Realisierung wäre kompliziert und aufwendig.

Es bestand daher die Aufgabe, eine Vorrichtung der eingangs genannten Art zu entwickeln, mit der Spritzgußteile aus der Etagenform einer Spritzgießmaschine entnommen werden können, wofür zwischen der Vorrichtung und dem bewegbaren Formwerkzeugteil eine Bewegungskopplung bestehen soll.

Die zur Lösung der Aufgabe entwickelte Vorrichtung ist gekennzeichnet durch einen ersten Ketten- oder Zahnriementrieb, der um zwei ortsfeste Umlenkräder geführt ist und in den ein auf der von der Spritzgießmaschine bewegbaren Formträgerplatte gelagertes Antriebsrad eingreift, einen zweiten und dritten Ketten- oder Zahnriementrieb, die mittels Übersetzungsgetriebe von dem ersten Ketten- oder Zahnriementrieb antreibbar und mit Entnahmewerkzeugen ausgestattet sind und von denen der eine mit der feststehenden Formträgerplatte und der andere mit einer der bewegbaren Formträgerplatten verbunden ist.

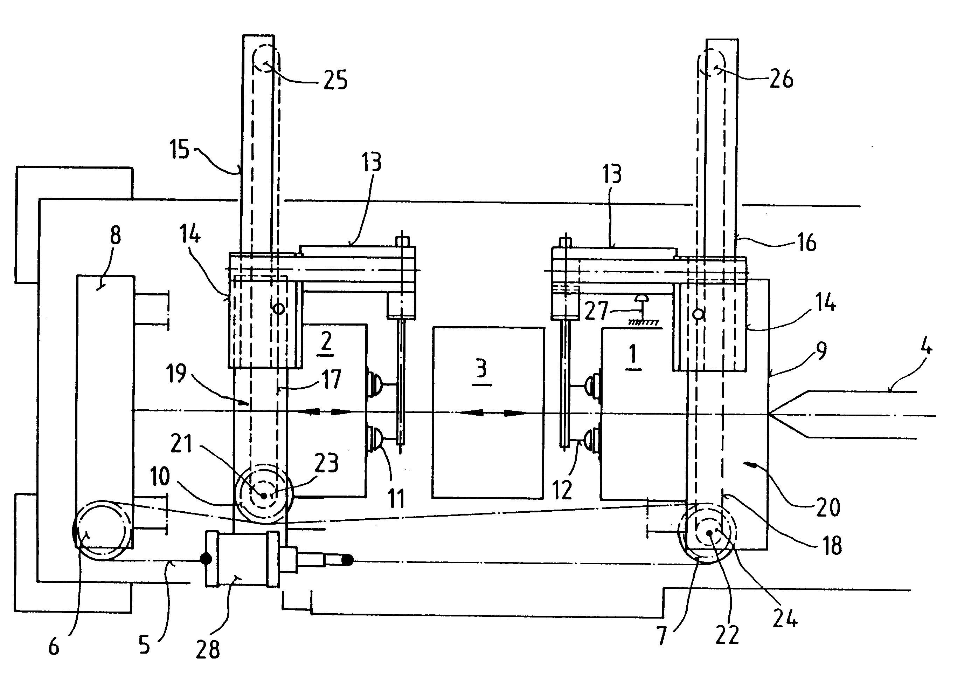

In der Zeichnung ist ein Ausführungsbeispiel der Vorrichtung schematisch dargestgellt und daran die Erfindung nachfolgend beschrieben.

Die Etagenform der Spritzgießmaschine, aus der die Spritzgußteile nach dem Öffnen der Form entnommen werden sollen, besteht aus einer feststehenden Formträgerplatte 1, einer dieser gegenüber bewegbaren, äußeren Formträgerplatte 2 und einer ebenso bewegbaren, mittleren Formträgerplatte 3, wobei die feststehende Formträgerplatte mit der Zuführung 4 für die Kunststoffschmelze versehen ist.

Die erfindungsgemäße Entnahmevorrichtung für die Spritzgußteile ist mittels Ketten- oder Zahnriementriebe kinematisch mit der bewegbaren Formträgerplatte 2 verbunden, so daß die Entnahmewerkzeuge unter der Öffnungsbewegung der Formträgerplatte zu den aus den Formnestern zu entnehmenden Spritzgußteilen fahrbar sind. Im vorliegenden Ausführungsbeispiel ist ein Zahnriementrieb verwendet.

Ein erster Zahnriemen 5 ist um zwei ortsfeste Umlenkräder 6 und 7 mit Zahnprofil geführt, die auf Montageplatten 8 und 9 drehbar gelagert sind. In den Zahnriemen greift ein auf der bewegbaren, äußeren Formträgerplatte 2 gelagertes Antriebsrad 10 ein, das unter der Bewegung der Platte sowohl auf dem Zahnriemen abrollt als auch diesen fortbewegt.

Entnahmewerkzeuge 11 und 12, beispielsweise Greifer oder Unterdruckheber, sind mittels Halteplatten 13, die mit Gleitbüchsen 14 versehen sind, auf Führungsschienen 15 und 16 zwischen die in der Offenstellung befindlichen Formträgerplatten fahrbar, wobei die Führungsschiene 16 für die der feststehenden Formträgerplatte 1 zugeordneten Werkzeuge 12 an der Montageplatte 9 und die Schiene 15 der für die bewegbare, äußere Formträgerplatte 2 vorgesehenen Werkzeuge 11 an letzterer befestigt sind.

Es ist vorteilhaft, die Entnahmewerkzeuge 11 und 12 an den Halteplatten 13 schwenkbar anzubringen. Dadurch ist die Möglichkeit gegeben, die Werkzeuge mit Hilfe eines geeigneten Antriebs in eine andere Ebene zu schwenken, um z.B. die Spritzgußteile auf ein Förderband oder direkt in ein Magazin abzulegen.

Zum Ein- und Ausfahren der Entnahmewerkzeuge 11 und 12 sind die Halteplatten am jeweiligen Zahnriemen 17, 18 befestigt. Es ist zweckmäßig, die Befestigung lösbar auszuführen, beispielsweise mittels pneumatischer Kupplungs- oder Spannelemente, um die Werkzeuge im Bedarfsfall, z.B. in der Anfahrphase der Spritzgießmaschine, außer Betrieb zu setzen. Der Antrieb der beiden Zahnriementriebe erfolgt durch den ersten Zahnriemen 5. Hierzu ist auf den Wellen 21 und 22 des Antriebsrades 10 und des der feststehenden Formträgerplatte 1 zugeordneten Umlenkrades 7 jeweils ein weiteres Umlenkrad 23 bzw. 24 drehfest angeordnet, um das und um ein am freien Ende der Führungsschiene 15 bzw. 16 angebrachtes Umlenkrad 25 bzw. 26 der Zahnriemen 17 bzw. 18 geführt ist. Das Übersetzungsverhältnis der durch die jeweilige Welle 21 bzw. 22 miteinander drehfest verbundenen Räder 10, 23 bzw. 7, 24 richtet sich nach dem Verhältnis der Wege der bewegbaren Formträgerplatte 2 bei der Öffnungs- bzw. Schließbewegung und der ein- bzw. auszufahrenden Entnahmewerkzeuge 11 und 12.

Zur genauen Positionierung der Werkzeuge 11 und 12 in der Entnahmestellung ist ein Anschlag 27 vorgesehen, gegen den eine der Halteplatten 13 anfährt. Dabei wird die das Antriebsrad 10 tragende Formträgerplatte 2 geringfügig weiterbewegt, z.B. 5 bis 10 mm, um ein festes Anstellen der Halteplatte am Anschlag zu erreichen. Ein in den ersten Zahnriemen 5 eingefügtes Spannelement 28, beispielsweise eine Feder oder ein hydraulischer oder ein pneumatischer, auf der Formträgerplatte 2 montierter Arbeitszylinder, vermeidet eine Überdehnung des dabei blockierten Zahnriemens. Ein Arbeitszylinder hat den Vorteil, daß die Spannkraft mittels des Arbeitsdrucks einstellbar ist. So kann beispielsweise der Druck und damit die Spannkraft bei Erreichen der Anschlagstellung vermindert werden, um die Belastung des Zahnriemens nicht höher werden zu lassen. Hierfür wird durch einen in der Anschlagposition vorhandenen Schalter oder Sensor über eine übliche Steuerschaltung ein entsprechendes Stellglied, z.B. ein Ventil, im Arbeitsdruckkreis eingestellt.

## Patentansprüche

1. Vorrichtung zur Entnahme von Spritzgußteilen aus einer Spritzgießmaschine mit Etagenform, die zwei gegenüber einer feststehenden Formträgerplatte (1) bewegbare Formträgerplatten (2, 3) aufweist, gekennzeichnet durch einen ersten Ketten- oder Zahnriementrieb (5 -7), der um zwei ortsfeste Umlenkräder (6, 7) geführt ist und in den ein auf der von der Spritzgießmaschine bewegbaren Formträgerplatte (2) gelagertes Antriebsrad (10) eingreift, einen zweiten und dritten Ketten- oder Zahnriementrieb (19, 20), die mittels Übersetzungsgetriebe (10, 23/7, 24) von dem ersten Ketten- oder Zahnriementrieb (5 - 7) antreibbar und mit Entnahmewerkzeugen (11, 12) ausgestattet sind und von denen der eine (20) mit der festestehenden Formträgerplatte (1) und der andere (19) mit einer der bewegbaren Formträgerplatten (2) verbunden ist.

2. Vorrichtung nach Anspruch 1, dadurch gekennzeichnet, daß die Übersetzungsgetriebe durch die Anordnung der einen Umlenkräder (23, 24) der zweiten und dritten Ketten- oder Zahnriementriebe (19, 20) auf der Welle (21) des Antriebsrades (10) bzw. auf der Welle (22) des der feststehenden Formträgerplatte (1) zugeordneten Umlenkrades (7) des ersten Ketten- oder Zahnriementriebs (5 - 7) gebildet sind.

3. Vorrichtung nach Anspruch 1 und 2, dadurch gekennzeichnet, daß zur genauen Positionierung der Entnahmewerkzeuge (11, 12) ein Anschlag (27) für mindestens eines dieser Werkzeuge vorgesehen ist und in den ersten Ketten- oder Zahnriementrieb (5 - 7) ein Spannelement (28) eingefügt ist.

4. Vorrichtung nach Anspruch 3, dadurch gekennzeichnet, daß das Spannelement (28) des ersten Ketten- oder Zahnriementriebs (5 - 7) bezüglich der Spannkraft einstellbar ist.

5. Vorrichtung nach Anspruch 3 und 4, dadurch gekennzeichnet, daß das Spannelement ein hydraulischer oder pneumatischer Arbeitszylinder (28) ist.

6. Vorrichtung nach Anspruch 1 bis 5, dadurch gekennzeichnet, daß die Entnahmewerkzeuge (11, 12) mit dem zweiten und dritten Ketten- oder Zahnriementrieb (19. 20) lösbar verbunden sind.

## Claims

1. Apparatus for removing injection molded parts from an injection molding machine having a multi-level mold which has two mold support plates (2, 3) which can be moved with respect to a stationary mold support plate (1), comprising a first chain drive or toothed belt drive (5-7) which passes around two stationary reversing wheels (6,7) and which is engaged by a drive wheel (10) mounted on the mold support plate (2) which can be moved by the injection molding machine, and second and third chain drives or toothed belt drives (19, 20) which can be driven by the first chain drive or toothed belt drive (5-7) by means of step-up gears (10, 23/7, 24) and are equipped with removal tools (11, 12), and one (20) of which is connected to the stationary mold support plate (1) and the other (19) is connected to one of the movable mold support plates (2).

2. Apparatus as claimed in claim 1, wherein the step-up gears are formed by arranging one reversing wheel (23, 24) each of the second and third chain drives or toothed belt drives (19, 20) on the shaft (21) of the drive wheel (10) or on the shaft (22) of the reversing wheel (7) of the first chain drive or toothed belt drive (5-7), which reversing wheel (7) is coordinated with the stationary mold support plate (1).

3. Apparatus as claimed in claim 1 or 2, wherein, for exact positioning of the removal tools (11, 12), a stop (27) is provided for one or more of these tools and a clamping element (28) is inserted in the first chain drive or toothed belt drive (5-7).

4. Apparatus as claimed in claim 3, wherein the clamping element (28) of the first chain drive or toothed belt drive (5-7) is adjustable in its clamping force.

5. Apparatus as claimed in claim 3 or 4, wherein the clamping element is a hydraulic or pneumatic working cylinder (28).

6. Apparatus as claimed in claim 1 or 2 or 3 or 4 or 5, wherein the removal tools (11, 12) are detachably connected to the second and third chain drives or toothed belt drives (19, 20).

## Revendications

1. Dispositif d'enlèvement de pièces moulées par injection, hors d'une machine à mouler par injection, de forme étagée, présentant deux plaques porte-moule (2,3) déplaçables par rapport à une plaque porte-moule (1) fixe, caractérisé par une première transmission à chaîne ou à courroie dentée (5 à 7), guidée autour de deux roues de renvoi (6,7) localement fixes et dans laquelle est en prise une roue d'entraînement (10), montée à rotation sur la plaque porte-moule (2), déplaçable de la machine à mouler par injection, une deuxième et une troisième transmission à chaîne ou à courroie dentée (19,20), susceptibles d'être entraînées au moyen de réducteurs (10, 23/7,24), par la première transmission à chaîne ou à courroie dentée (5 à 7) et équipées d'outils d'enlèvement (11,12), et dont l'une (20) est reliée à la plaque porte-moule fixe (1) et l'autre (19) est reliée à l'une des plaques porte-moule déplaçable (2).

2. Dispositif selon la revendication 1, caractérisé en ce que les réducteurs sont formés par l'agencement d'une roue de renvoi (23,24) des deuxième et troisième transmissions à chaîne ou à courroie dentée (19,20) sur l'arbre (21) de la roue d'entraînement (10), ou sur l'arbre (22) de la roue de renvoi (7) associée à la plaque porte-moule (1) fixe de la première transmission à chaîne ou à courroie dentée (5 à 7).

3. Dispositif selon les revendications 1 et 2, caractérisé en ce que, pour assurer un positionnement précis des outils d'enlèvement (11,12), est prévue une butée (27) pour au moins l'un de ces outils et un élément de serrage (28) est inséré dans la première transmission à chaîne ou à courroie dentée (5 à 7).

4. Dispositif selon la revendication 3, caractérisé en ce que la force de serrage de l'élément de serrage (28) de la première transmission à chaîne ou à courroie dentée (5 à 7) est réglable.

5. Dispositif selon les revendications 3 et 4, caractérisé en ce que l'élément de serrage est un vérin moteur (28), hydraulique ou pneumatique.

6. Dispositif selon les revendications 1 à 5, caractérisé en ce que les outils d'enlèvement (11,12) sont reliés de façon amovible aux deuxième et troisième transmissions à chaîne ou à courroie dentée (19,20).
